(19) Europäisches Patentamt

European Patent Office

Office européen des brevets

(11) **EP 0 939 362 B1**

(12) **FASCICULE DE BREVET EUROPEEN**

(45) Date de publication et mention
de la délivrance du brevet:
**26.09.2001 Bulletin 2001/39**

(51) Int Cl.⁷: **G06F 7/544**, G06F 7/72

(21) Numéro de dépôt: **99470004.5**

(22) Date de dépôt: **17.02.1999**

(54) **Coprocesseur d'arithmétique modulaire permettant de réaliser des opérations non modulaires rapidement**

Koprozessor für moduläre Arithmetik mit einer schnellen Ausführung von nicht-modulären Operationen

Modular arithmetic coprocessor for fast execution of non-modular operations

(84) Etats contractants désignés:
**DE FR GB IT**

(30) Priorité: **26.02.1998 FR 9802499**

(43) Date de publication de la demande:
**01.09.1999 Bulletin 1999/35**

(73) Titulaire: **STMicroelectronics S.A.**
**94250 Gentilly (FR)**

(72) Inventeur: **Romain, Fabrice,**
**Cabinet Ballot Schmit**
**57000 Metz (FR)**

(74) Mandataire: **Ballot, Paul Denis Jacques**
**Cabinet Ballot**
**9 Rue Claude Chappé**
**57070 Metz (FR)**

(56) Documents cités:
**EP-A- 0 435 399**     **EP-A- 0 678 807**
**EP-A- 0 793 165**     **WO-A-93/25959**

## Description

L'invention concerne un coprocesseur d'arithmétique modulaire amélioré de manière à effectuer rapidement des opérations non modulaires. Plus précisément, l'invention concerne l'amélioration d'un coprocesseur d'arithmétique permettant de réaliser des opérations modulaires selon la méthode de Montgomery, afin d'étendre les possibilités d'un tel dispositif. La méthode de Montgomery permet d'effectuer des calculs modulaires dans un corps fini $GF(2^n)$ (corps de Galois) sans effectuer de divisions.

Classiquement, les opérations modulaires sur $GF(2^n)$ sont utilisées en cryptographie pour des applications telles que l'authentification de messages, l'identification d'un utilisateur et l'échange de clés. De tels exemples d'applications sont décrits par exemple dans un document D1 qui correspond à la demande de brevet FR-A-2 679 054.

On trouve dans le commerce des circuits intégrés dédiés à de telles applications, par exemple le produit fabriqué par la société SGS-THOMSON Microelectronics et portant la référence ST16CF54, bâti autour d'une association de type unité centrale - - coprocesseur arithmétique, et dédié à la mise en oeuvre de calculs modulaires. Le coprocesseur utilisé permet de traiter des opérations modulaires en utilisant la méthode de Montgomery. Il fait l'objet de la demande de brevet EP-A-0 601 907 que l'on appellera par la suite le document D2. Ce coprocesseur est illustré sur la figure 1 (cette figure correspondant à la figure 2 du document D2).

L'opération de base (appelée Pfield) mise en oeuvre par ce coprocesseur consiste, à partir de trois données binaires A (multiplicande), B (multiplieur), et N (modulo), codées sur un nombre entier n de bits, à produire une donnée binaire $P_{field}(A, B)_N$ codée sur n bits, telle que $P_{field}(A, B)N = A * B * I \bmod N$. I est une donnée binaire, appelée erreur, codée sur n bits tels que $I = 2^{-n} \bmod N$ (plus précisément, la valeur de I dépend du nombre de blocs de k bits considérés pour le codage de A, étant k un entier). Pour réaliser l'opération $A * B * I \bmod N$, on considère que les données sont codées sur m mots de k bits (m et k étant des nombres entiers), avec $m * k = n$. On fournit les mots des données A et B à un circuit de multiplication 19 ayant une entrée série pour recevoir B, une entrée parallèle pour recevoir les blocs de k bits de A, et une sortie série.

Dans le document D2, le coprocesseur travaille avec k = 32 et m = 8 ou 16. Le coprocesseur de D2 peut être utilisé pour produire le résultat de la multiplication modulaire $A * B \bmod N$. La multiplication modulaire se décompose en deux opérations élémentaires Pfield successives. On calcule $P_{field}(P_{field}(A, B)N, H)_N$, avec H une donnée codée sur n bits, appelée paramètre de correction d'erreur, et égale à $2^{2n} \bmod N$. Pour de plus amples détails sur la mise en oeuvre de la multiplication modulaire, on pourra se reporter au document D2. Plusieurs possibilités de calcul sont déjà connues; elles consistent à utiliser soit une méthode logicielle, soit un circuit spécialisé tel que celui illustré dans le document D2.

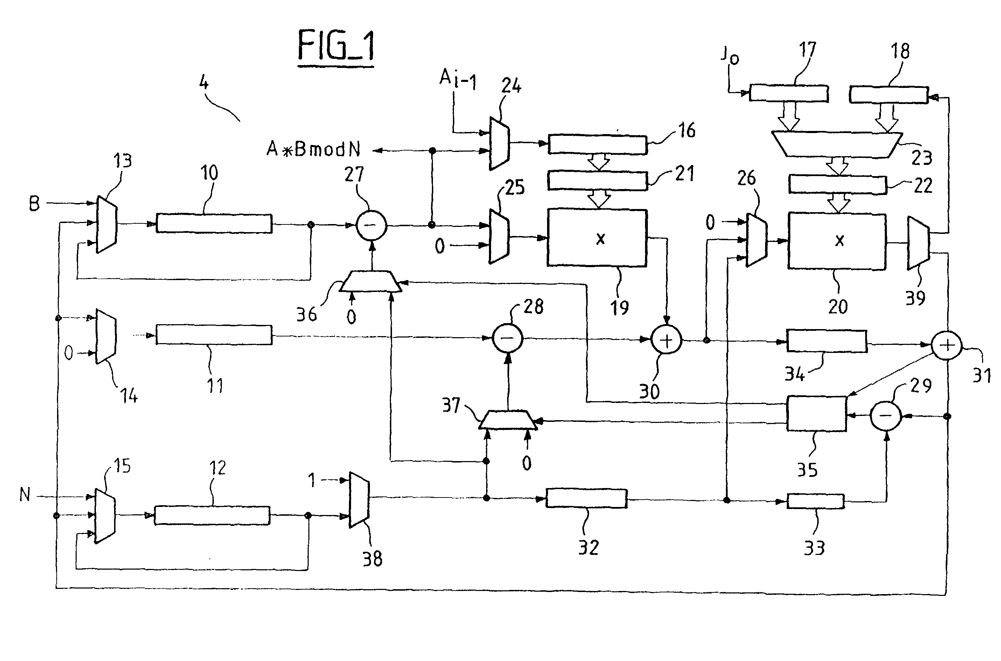

Le circuit illustré sur la figure 1 comprend :

- trois registres à décalage 10, 11 et 12 à entrée et sortie série, ces registres comportant un nombre n de cellules, avec n = m * k,
- des multiplexeurs 13, 14 et 15 placés respectivement devant les entrées des registres 10, 11 et 12,
- trois registres 16, 17 et 18 à entrée série et sortie parallèle, et comportant k cellules,
- deux circuits 19 et 20 de multiplication comprenant une entrée série, une entrée parallèle et une sortie série,
- deux registres 21 et 22 de k cellules,
- des multiplexeurs 24, 25, 26, 36, 37 et 38,
- un démultiplexeur 39,
- des circuits 27, 28 et 29 de soustraction série,
- des circuits 30 et 31 d'addition série,
- des cellules à retard 32, 33 et 34 pour retarder de k temps de cycle la propagation de données binaires,
- un circuit 35 de comparaison.

Pour plus de détails sur les arrangements des différents éléments du circuit entre eux, on pourra se reporter au document D2.

L'utilisation du circuit illustré sur la figure 1 permet d'optimiser (en terme de durée de calcul, de taille mémoire, etc.) le traitement d'opérations modulaires utilisant une taille de donnée fixée, en l'occurrence 256 ou 512 bits. Or, la cryptographie nécessite des machines de plus en plus performantes, travaillant de plus en plus vite et utilisant des clefs de plus en plus complexes. On s'oriente ainsi vers la manipulation de données codées sur 768, 1024, 1536 et même 2048 bits. Pour traiter de telles données, on peut envisager de réaliser des circuits de dimensions plus importantes en adaptant les éléments du circuit aux tailles des données. Cette solution peut poser des problèmes dans des applications telles que les cartes à puce pour lesquelles la taille des circuits est physiquement limitée à cause des différences de contrainte mécanique de flexion entre les cartes et les substrats de silicium. De plus, il est demandé d'intégrer de plus en plus d'éléments fonctionnels différents sur une telle carte et la place disponible pour un circuit de cryptage en est d'autant plus réduite. Il faut donc trouver des solutions permettant de limiter l'augmentation de la taille de ce circuit, tout en permettant de fonctionner de manière optimum pour des données de taille supérieure à la taille des registres prévues initialement.

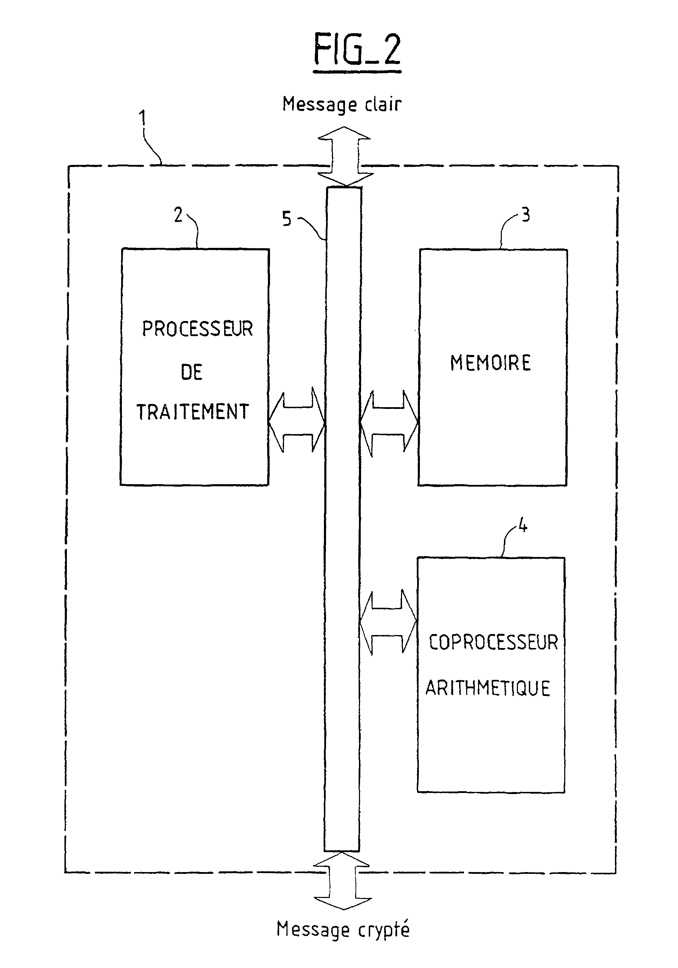

Pour réaliser des opérations modulaires utilisant des opérandes d'une taille supérieure à ce que gère le coprocesseur (c'est-à-dire en pratique de la taille maximale des registres), on peut utiliser le circuit 1 représenté sur la figure 2 qui comporte un processeur classique 2 (8, 16, ou 32 bits), une mémoire 3, le coprocesseur 4 de la figure 1, et un bus de communication 5 servant à relier les différents éléments 2, 3 et 4 ensemble et/ou à l'extérieur du circuit 1. Dans le circuit de la figure 2, le coprocesseur 4 est utilisé comme multiplieur travaillant sur m * k bits (classiquement 256 ou 512 bits). Le processeur 2 sert à superviser notamment les opérations à réaliser suivant un algorithme de cryptage particulier et les échanges de données entre la mémoire 3 et le coprocesseur 4.

Or la réalisation de l'opération de base des calculs modulaires selon la méthode de Montgomery, dite $P_{field}$, consiste, à partir de trois données binaires A (multiplicande), B (multiplieur) et N (modulo), codées sur un nombre entier n de bits, à produire une donnée binaire notée $P(A, B)_N$ codée sur n bits, telle que $P(A, B)_N = A * B * I \bmod N$, I étant une erreur due à la méthode de Montgomery. Dans le cas où n est de taille supérieure à la taille des registres, c'est à dire m * k, il convient de décomposer n en p mots de Bt bits, Bt étant une base de travail de taille inférieure ou égale à m * k, par exemple m * k. La méthode de Montgomery se déroule ainsi, i étant un indice variant de 0 à m - 1, on répète la boucle de calcul suivante:

$$X = S_i + A_i * B,$$

$$Y_0 = (X * J_0) \bmod 2^{Bt},$$

$$Z = X + (N * Y_0),$$

$S_{i+1} = Z \setminus 2^{Bt}$, \ étant une division entière, si $S_{i+1}$ est supérieur à N alors on soustrait N à $S_{i+1}$, $A_i$ correspondant à un mot de Bt bits de la décomposition de A, et
$S_i$ correspondant à un résultat actualisé de l'opération $P_{field}$ et $S_m = P(A, B)_N = A * B * I \bmod N$, $S_o$ étant égal à zéro.

Un tel procédé de calcul nécessite un grand nombre d'échanges de données entre le coprocesseur 4 et la mémoire 3. En effet, le coprocesseur 4 de la figure 1 ne peut réaliser que des multiplications simple A B = S, A et B étant codés sur Bt bits et S étant codé sur 2 * Bt bits. Une solution proposée dans le document EP-A-0 793 165, appelé par la suite D3, consiste à effectuer dans le coprocesseur 4 une opération du type S = A * B + C, dans laquelle A, B et C sont codées sur Bt bits, S étant codé sur 2 * Bt bits.

La figure 3 représente un coprocesseur 4 selon D3. Le coprocesseur 4 illustré sur la figure 3 comprend :

- trois registres à décalage 110, 111 et 112 à entrée série et sortie série, ces registres comportant un nombre n (n entier) de cellules, avec n = m * k (m et k entiers);

- un multiplexeur 113 comprenant crois entrées série et une sortie série, la sortie série étant reliée à l'entrée du registre 110, la première entrée étant reliée à une première borne d'entrée 150, la deuxième entrée étant reliée à la sortie du registre 110;

- un multiplexeur 114 comprenant deux entrées série et une sortie série, la sortie série étant reliée à l'entrée du registre 111, la première entrée étant reliée à une deuxième borne d'entrée 151;

- un multiplexeur 115 comprenant trois entrées série et une sortie série, la sortie série étant reliée à l'entrée du registre 112, la première entrée étant reliée à une troisième borne d'entrée 152, la deuxième entrée étant reliée à la sortie du registre 112;

- trois registres 116, 117 et 118 de k cellules comprenant une entrée série et une sortie parallèle, l'entrée du registre 117 étant reliée à une quatrième borne d'entrée 153;

- deux circuits 119 et 120 de multiplication comprenant une entrée série, une entrée parallèle pour recevoir k bits, et une sortie série;

- deux registres 121 et 122 de mémorisation de k cellules comprenant une entrée parallèle et une sortie parallèle, l'entrée du registre 121 étant reliée à la sortie du registre 116, la sortie du registre 121 étant reliée à l'entrée parallèle du circuit de multiplication 119, et la sortie du registre 122 étant reliée à l'entrée parallèle du circuit de multiplication 120;

- un multiplexeur 123 comprenant deux entrées parallèles et une sortie parallèle, la première entrée du multiplexeur 123 étant reliée à la sortie du registre 117, la deuxième entrée du multiplexeur 123 étant reliée à la sortie du registre 118, la sortie du multiplexeur 123 étant reliée à l'entrée du registre 122;

- deux multiplexeurs 124 et 125 comprenant chacun deux entrées série et une sortie série, la sortie du multiplexeur 124 étant reliée à l'entrée du registre 116, la première entrée du multiplexeur 124 étant reliée à une cinquième borne d'entrée 154, la sortie du multiplexeur 125 étant reliée à l'entrée série du circuit de multiplication 119, la première entrée du multiplexeur 125 recevant un zéro logique;

- un multiplexeur 126 comprenant trois entrées série et une sortie série, la sortie étant reliée à l'entrée série du circuit de multiplication 120, la première entrée recevant un zéro logique;

- des circuits 127, 128 et 129 de soustraction comprenant chacun deux entrées série et une sortie série, la première entrée du circuit 127 étant reliée à la sortie du registre 110, la sortie du circuit 127 étant reliée à chacune des deuxièmes entrées des multiplexeurs 124 et 125 et également à une borne de sortie 155, la première entrée du circuit 128 étant reliée à la sortie du registre 111;

- un circuit 130 d'addition comprenant deux entrées série et une sortie série, la première entrée du circuit 130 étant reliée à la sortie du circuit 119, la sortie du circuit 130 étant reliée à la deuxième entrée du multiplexeur 126;

- un circuit 131 d'addition comprenant deux entrées série, une sortie série et une sortie de retenue, la sortie de retenue du circuit 131 étant reliée à la première entrée du circuit 129;

- des cellules à retard 132, 133 et 134 pour retarder de k temps de cycle la propagation de données binaires (ces cellules étant typiquement des registres à décalage de k bits), ces cellules comprenant une entrée série et une sortie série, la sortie de la cellule 132 étant reliée d'une part à la troisième entrée du multiplexeur 126 et d'autre part à l'entrée de la cellule 133, la sortie de la cellule 133 étant reliée à la deuxième entrée du circuit 129, l'entrée de la cellule 134 étant reliée à la sortie du circuit 130, et la sortie de la cellule 134 étant reliée à la première entrée du circuit 131;

- un circuit 135 de comparaison comprenant deux entrées série et deux sorties, la première entrée étant reliée à la sortie du circuit 131, la deuxième entrée étant reliée à la sortie du circuit 129;

- deux multiplexeurs 136 et 137 comprenant chacun deux entrées série, une entrée de sélection, et une sortie série, chacune des premières entrées recevant un zéro logique, chacune des encrées de sélection étant reliée à l'une des sorties du circuit 135, la sortie du multiplexeur 136 étant reliée à la deuxième entrée du circuit 127, la sortie du multiplexeur 137 étant reliée à la deuxième entrée du circuit 128;

- un multiplexeur 138 comprenant deux entrées série et une sortie série, la première entrée recevant un "un" logique, la deuxième entrée étant reliée à la sortie du registre 112, la sortie étant reliée d'une part à l'entrée de la cellule 132 et d'autre part aux deuxièmes entrées des multiplexeurs 136 et 137;

- un démultiplexeur 139 comprenant une entrée série et deux sorties série, l'entrée étant reliée à la sortie du circuit 120, les sorties étant reliées respectivement à l'entrée du registre 118 et à la deuxième entrée du circuit 131;

- un multiplexeur 140 comprenant deux entrées série et une sortie série, la première entrée étant reliée à la sortie du circuit 128, la deuxième entrée étant reliée à un zéro logique, et la sortie étant reliée à la deuxième entrée du circuit 130;

- un multiplexeur 141 comprenant deux entrées série et une sortie série, la première entrée étant reliée à la sortie du circuit 130, la deuxième entrée étant reliée à la sortie du circuit 131, et la sortie étant reliée aux troisièmes entrées des multiplexeurs 113 et 115 et à la deuxième entrée du multiplexeur 114;

- deux bornes de sortie 156 et 157 reliées respectivement aux sorties des registres 111 et 112.

Pour le fonctionnement du coprocesseur 4 de la figure 3, l'homme du métier peut se reporter à D3. L'avantage majeur du coprocesseur 4 de la figure 3 est qu'il permet de chaîner les multiplications en conservant les Bt bits de poids fort du résultat de la multiplication précédente. La fonction réalisée permet ainsi d'effectuer plus rapidement le produit A * B, A étant codé sur Bt bits et B étant codé sur p * Bt bits par découpage successif du produit.

Dans D3, une variante de réalisation montre un circuit qui permet de réaliser l'opération élémentaire S = A * B + C + D, avec A, B, C et D codés sur Bt bits, S étant codé sur 2 * Bt bits. Le but d'une telle variante a pour objet d'effectuer simultanément une multiplication sur p * Bt bits et une addition sur p * Bt bits pour réaliser plus rapidement les calculs de $X = S_i + A_i * B$ et $Z = X + (N * Y_0)$ de l'algorithme de Montgomery.

Si l'on développe l'algorithme de Montgomery réalisé à partir d'opérations élémentaires de type S = A * B + C + D, on obtient la répétition de la boucle de calcul suivante:

A) calcul de $X = S_i + A_i * B$, soit:

$X_p...X_0 = S_{i,p-1}...S_{i,0} + A_i * B_{p-1}...B_0$, avec $X_j$, $S_{i,j}$ et $B_j$ les mots de Bt bits de X, $S_i$ et B, à l'aide de la succession des p calculs suivant réalisés dans le coprocesseur 4:

A1) $X'_1 X_0 = S_{i,0} + A_i * B_0 + 0$
A2) $X'_2 X_1 = S_{i,1} + A_i * B_1 + X'_1$
...      ...
Ap-1) $X'_{p-1} X_{p-2} = S_{i,p-2} + A_i * B_{p-2} + X'_{p-2}$
Ap) $X_p X_{p-1} = S_{i,p-1} + A_i * B_{p-1} + X'_{p-1}$

avec $X'_1$ à $X'_{p-1}$ des mots de 3t bits de calcul intermédiaire qui restent en permanence dans le coprocesseur 4;

B) $Y_0 = (X * J_0) \bmod 2^{Bt}$, soit:

$Y_0 = (X_p...X_0 * J_0) \bmod 2^{Bt}$, par le calcul suivant réalisé dans le coprocesseur 4:

$Y'_1 Y_0 = X_0 * J_0 + 0$

le mot de poids faible $Y_0$ étant le seul intéressant;

C) $Z = X + N * Y_0$, soit:

$Z_p...Z_0 = X_p...X_0 + Y_0 * N_{p-1}...N_0$, avec $Z_j$, $X_j$ et $N_j$ les mots de Bt bits de Z, X et N, à l'aide de la succession des p + 1 calculs suivant réalisés dans le coprocesseur 4:

C1) $Z'_1 Z_0 = X_0 + Y_0 * N_0 + 0$
C2) $Z'_2 Z_1 = X_1 + Y_0 * N_1 + Z'_1$
...      ...
Cp-1) $Z'_{p-1} Z_{p-2} = X_{p-2} + Y_0 * N_{p-2} + Z'_{p-2}$
Cp) $Z'_p Z_{p-1} = X_{p-1} + Y_0 * N_{p-1} + Z'_{p-1}$
Cp+1) $Z_p = X_p + 0 * 0 + Z'_p$

avec $Z'_1$ à $Z'_p$ des mots de Bt bits de calcul intermédiaire qui restent en permanence dans le coprocesseur 4;

D) $S_{i+1} = Z \setminus 2^{Bt}$, \ étant une division entière, si $S_{i+1}$ est supérieur à N alors on soustrait N à $S_{i+1}$.

L'invention propose d'améliorer le temps de calcul en supprimant le calcul repéré Cp+1 en créant une nouvelle opération du type S = A * B + C, avec S et C codés sur 2 * Bt bits, et A et B codés sur Bt bits. Pour réaliser cette nouvelle opération, une bascule de mémorisation de débordement a été rajoutée pour mémoriser un éventuel débordement à l'issu d'un calcul élémentaire et réinjecter l'éventuel débordement lors du calcul suivant.

L'invention a pour objet un circuit ainsi qu'un procédé de calcul tels que définis dans les revendications 1 et 6, respectivement.

Des modes de réalisalion selon l'invention sont spécifiés dans les revendications dépendantes attenantes.

Selon une variante, le circuit de calcul comporte un cinquième registre de m * k bits pour fournir de manière successive des mots de k bits au quatrième registre.

L'invention propose également de réaliser la même opération élémentaire en utilisant les deux multiplieurs en parallèle afin de réduire par deux le temps de calcul. Dans cet optique, le circuit de calcul comporte un deuxième circuit de multiplication pour effectuer, simultanément avec le premier circuit de multiplication, la multiplication de la donnée du premier registre avec une donnée d'un sixième registre de k bits, les moyens d'addition additionnant, avec un décalage de k bits, le résultat sortant du deuxième circuit de multiplication.

L'invention porte également sur un coprocesseur d'arithmétique modulaire comportant des moyens pour mettre en oeuvre des opérations modulaires sur des nombres codés sur m * k bits, m et k étant des entiers, et le circuit de calcul précédemment défini. Plus généralement, l'invention porte sur un dispositif de calcul modulaire comportant un processeur, une mémoire, caractérisé en ce qu'il comporte ledit coprocesseur.

Dans une variante, on mémorise entièrement une opérande dans un cinquième registre de m * k bits pour fournir l'opérande de manière successive au quatrième registre.

Pour diviser par deux le temps nécessaire à la réalisation du procédé, on effectue en parallèle une deuxième multiplication dont le résultat est additionné avec un décalage de k bits.

Plus généralement, l'invention porte sur un procédé de calcul d'opération modulaire sur des opérandes de taille supérieur à m * k bits dans lequel les opérandes sont traitées par mots de m * k bits, en utilisant le procédé de l'invention.

L'invention sera mieux comprise et d'autres particularités et avantages apparaîtront à la lecture de la description qui va suivre, la description faisant référence aux dessins annexés parmi lesquels:

la figure 1 représente un coprocesseur modulaire selon l'art antérieur,
la figure 2 représente un dispositif de calcul modulaire selon l'art antérieur,
la figure 3 représente un coprocesseur modulaire selon l'art antérieur,
les figures 4 et 5 représentent deux modes de réalisation d'un coprocesseur de calcul modulaire selon l'invention.

Les figures 1 à 3 étant décrites précédemment et leur fonctionnement étant décrit dans D2 et D3, elles ne seront pas décrites plus en détail.

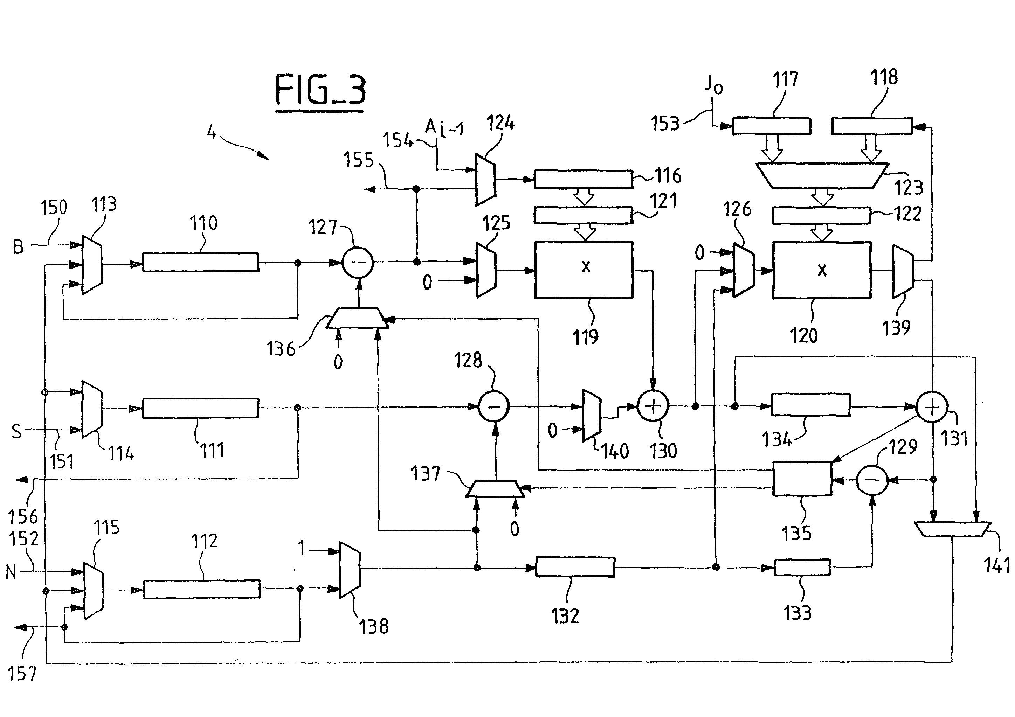

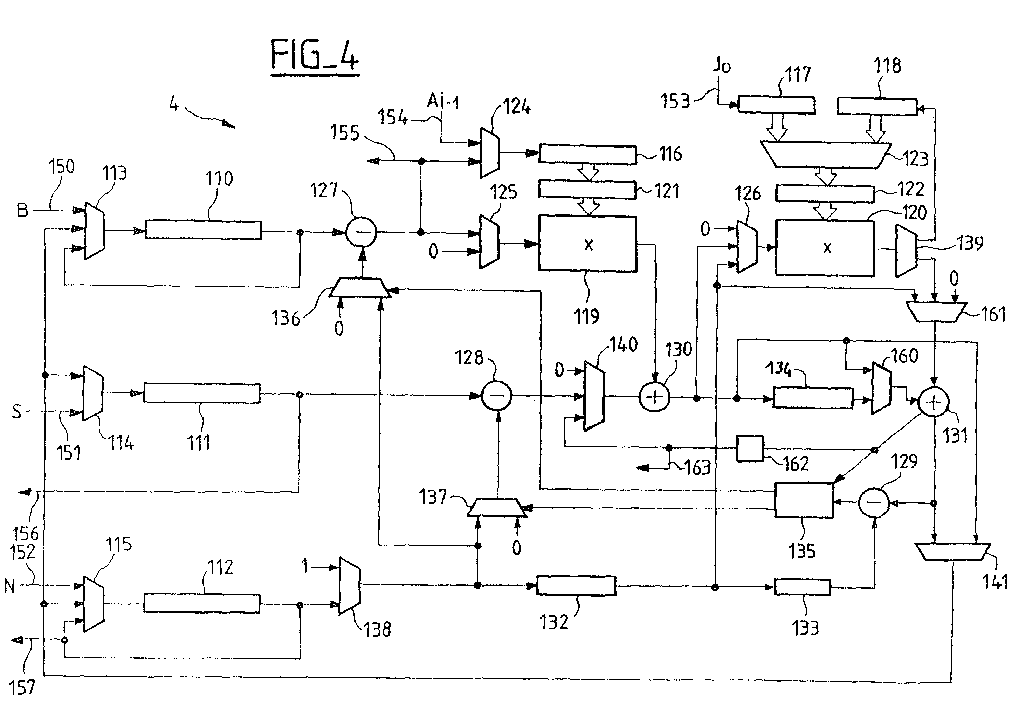

La figure 4 représente le coprocesseur 4 de la figure 3 modifié selon l'invention. Les modifications effectuées sont les suivantes:

- la cellule à retard 132 est utilisée comme un registre à décalage de k bits;
- le multiplexeur 140 comporte une troisième entrée;
- les entrées du circuit 131 d'addition ne sont plus connectées aux sorties de la cellule à retard 134 et du démultiplexeur 139;
- un multiplexeur 160 comprenant deux entrées et une sortie a été ajouté, la première entrée du multiplexeur 160 étant connectée à la sortie du circuit 130, la deuxième entrée du multiplexeur 160 étant connectée à la sortie de la cellule à retard 134, et la sortie du multiplexeur 160 étant connectée à la première entrée du circuit 131;
- un multiplexeur 161 comprenant trois entrées et une sortie a été ajouté, la première entrée du multiplexeur 161 étant connectée à la sortie de la cellule à retard 132, la deuxième entrées du multiplexeur 161 étant connectée à la deuxième sortie du démultiplexeur 139, la troisième entrée du multiplexeur 161 étant reliée à un zéro logique, et la sortie du multiplexeur 161 étant connectée à la deuxième entrée du circuit 131;
- une bascule 162 de mémorisation comprenant une entrée et une sortie a été ajoutée, la bascule servant à mémoriser un bit, l'entrée de la bascule 162 étant connectée à la sortie de retenue du circuit 131, et la sortie de la bascule 162 étant connectée à la troisième entrée du multiplexeur 140;
- une borne de sortie 163 connectée à la sortie de la bascule 162 permet de sortir le bit contenu dans la bascule.

Les différents éléments constituant le coprocesseur 4 de la figure 4 peuvent par ailleurs être modifiés pour supporter des fonctionnalités supplémentaires. Ainsi l'ajout de circuits de calcul et de multiplexeur supplémentaires créant de nouvelles capacités de traitement autorisant les chemins nécessaires pour le déroulement de l'opération objet de l'invention est tout à fait envisageable. De même, si les multiplexeurs 140, 141, 160 et 161 ont leurs sorties dirigées respectivement sur leurs première, deuxième, deuxième et deuxième entrées, on retrouve le coprocesseur 4 de la figure 1. Pour effectuer les différentes fonctions du circuit de la figure 1, il convient de se reporter à D2.

Pour pouvoir réaliser l'opération élémentaire de l'invention $S = A * B + C$, il convient de neutraliser certains éléments du coprocesseur 4 de la figure 4. Ainsi, les multiplexeurs 136 et 137 sont positionnés pour fournir "0" sur leurs sortie afin que les circuits 127 et 128 se comportent fonctionnellement comme des fils; le multiplexeur 160 est positionné pour relier en permanence la sortie du circuit 130 à la première entrée du circuit 131.

Pour des raisons de clarté, dans les explications qui vont suivre, on ne tiendra pas compte des retards causés par les circuits 127, 128, 130 et 131 de soustraction et d'addition ni d'éventuels retards causés par l'initialisation des différents éléments du coprocesseur 4. En effet, l'homme du métier sait comment synchroniser des circuits entre eux. Les explications qui vont suivre permettront de réaliser le séquencement nécessaire des différents éléments du coprocesseur 4 pour réaliser l'opération élémentaire de l'invention $S = A * B + C$, A et B étant codés sur $Bt = m * k$ bits, et C et S étant codés sur $2 * Bt = 2 * m * k$ bits:

Initialisation:

I0) on charge dans le registre 121, par l'intermédiaire du registre 116, le mot $A_0$ de k bits de poids le plus faible de l'opérande A; on charge dans le registre 110 les $m * k$ bits de l'opérande B; on charge dans le registre 111 les $m * k$ bits de poids faible de l'opérande C notée $C_0$; on charge dans le registre 112 les $m * k$ bits de poids fort de l'opérande C notée $C_1$; on initialise à zéro le registre 132 et les circuit 130 et 131; et si il s'agit d'une première opération élémentaire, alors on initialise à "0" la bascule 162.

Première itération:

I1) on effectue un décalage de k bits sur les registres 110, 111, 112 et 132, les données sortant du registre 110 étant multipliées par le contenu du registre 121 dans le circuit 119, le registre 110 ayant son entrée reliée à sa sortie, les données sortant du registre 111 étant additionnées avec le résultat sortant du circuit 119 dans le circuit 130, les données sortant du registre 112 étant chargées dans le registre 132, les données entrant dans le registre 112 provenant de la sortie du circuit 130;

I2) on effectue un décalage de $(m - 1) * k$ bits sur les registres 110 et 111, les données sortant du registre 110 étant multipliées par le contenu du registre 121 dans le circuit 119, le registre 110 ayant son entrée reliée à sa sortie, les données sortant du registre 111 étant additionnées avec le résultat sortant du circuit 119 dans le circuit 130, les données entrant dans le registre 111 provenant de la sortie du circuit 130;

I3) on effectue un décalage de 1 bit sur les registres 111 et 132, un "0" étant envoyé au circuit 119, le bit présent dans la bascule 162 étant additionné avec le résultat sortant du circuit 119 dans le circuit 130, le bit sortant du registre 132 étant additionné au résultat sortant du circuit 130 dans le circuit 131, les données entrant dans le registre 111 provenant de la sortie du circuit 131;

I4) on effectue un décalage de $k - 1$ bits sur les registres 111 et 132, des "0" étant envoyés au circuit 119, des "0" étant additionnés avec le résultat sortant du circuit 119 dans le circuit 130, les bits sortant du registre 132 étant additionnés au résultat sortant du circuit 130 dans le circuit 131, les données entrant dans le registre 111 provenant de la sortie du circuit 131; lors du dernier décalage, on mémorise dans la bascule 162 la retenue présente dans le circuit 131;

I5) pendant que l'on effectue les étapes I1 à I4, on charge le mot $A_1$ dans le registre 116.

A l'issue de la première itération, le registre 110 contient l'opérande B; le registre 111 contient un résultat intermédiaire qui correspond aux $m * k$ bits de poids fort de l'opération $A_0 * B + C_{1,0}C_0$, $A_0$ correspondant aux k bits de poids faible de A, $C_{1,0}$ correspondant aux k bits de poids faible du mot $C_1$ de $k * m$ bits de poids fort de l'opérande C, et $C_0$ correspondant au mot de $m * k$ bits de poids faible de l'opérande C; le registre 112 contient en bits de poids fort le mot $S_{0,0}$ et en bits de poids faible les mots $C_{1,m-1}$ à $C_{1,1}$, le mot $S_{0,0}$ correspondant aux k bits de poids faible du mot $S_0$ de $m *$ k bits du résultat S de l'opération élémentaire de l'invention, les mots $C_{1,m-1}$ à $C_{1,1}$ correspondant aux $m - 1$ mots de k bits de poids fort du mot $C_1$ de $m * k$ bits de poids fort de l'opérande C; le registre 116 contient le mot $A_1$ correspondant au mot de k bits de poids 1 de l'opérande A; la bascule 162 contient une éventuelle retenue de débordement résultant de l'itération.

Boucle de calcul:

on répète $m - 1$ fois l'initialisation de boucle et l'itération de boucle qui suivent, j étant un indice variant de 1 à $m - 1$:

Initialisation de boucle:

I'0) on charge dans le registre 121 le mot $A_j$ contenu dans le registre 116; on initialise à zéro le registre 132 et les circuit 130 et 131.

Itération de boucle:

on effectue les étapes I1 à I4 définies précédemment:

I'5) -pendant que l'on effectue les étapes I1 à I4, on charge le mot $A_{j+1}$ dans le registre 116.

A l'issue de chaque itération de boucle, le registre 110 contient l'opérande B; le registre 111 contient un résultat intermédiaire qui correspond aux m * k bits de poids fort de l'opération $A_j..A_0 * B + C_{1,j}..C_{1,0}C_0$, $A_j..A_0$ correspondant aux j * k bits de poids faible de A, $C_{1,j}..C_{1,0}$ correspondant aux j * k bits de poids faible du mot de k * m bits de poids fort de l'opérande C, et $C_0$ correspondant au mot de m * k bits de poids faible de l'opérande C; le registre 112 contient en bits de poids fort les mots $S_{0,j}$ à $S_{0,0}$ et en bits de poids faible les mots $C_{1,m-1}$ à $C_{1,j+1}$, les mots $S_{0,j}$ à $S_{0,0}$ correspondant aux j * k bits de poids faible du mot $S_0$ de m * k bits du résultat S de l'opération élémentaire de l'invention, les mots $C_{1,m-1}$ à $C_{1,j+1}$ correspondant aux m - 1 - j mots de k bits de poids fort du mot $C_1$ de m * k bits de poids fort de l'opérande C; le registre 116 contient le mot $A_{j+1}$ correspondant au mot de k bit de poids j+1 de l'opérande A; la bascule 162 contient une éventuelle retenue de débordement résultant de l'itération précédente.

A l'issue de la dernière itération, le résultat S est contenu dans les registres 111 et 112, une éventuelle retenue étant mémorisée dans la bascule 162. Si l'on désire récupérer la totalité du résultat, on sort les données contenues dans les registres 111 et 112 par l'intermédiaire des bornes 156 et 157, et on récupère l'éventuelle retenue indiquant un débordement de calcul par l'intermédiaire de la borne 163.

Si par contre on désire enchaîner un calcul, on sort uniquement le contenu du registre 112. Pour effectuer l'enchaînement de calcul, on charge dans le registre 112 un mot de Bt = m * k bits de poids supérieur de la variable à additionner; on présente ensuite le mot de poids supérieur remplaçant A; on n'effectue pas la remise à jour de la bascule 162.

A titre d'exemple, la réalisation d'une opération $P_{field}(D, E)_N = S$ avec le circuit 1 de la figure 2 utilisant le processeur 4 de la figure 4, D, E, S et N étant codés sur p mots de Bt bits, Bt étant égal à m * k bits se déroule ainsi:

on répète p fois la boucle de calcul constituées de la succession d'étapes suivante, i étant un indice variant de 0 à p-1 et étant incrémenté pour chaque exécution de la boucle par le processeur 2:

PX) calcul de $X = S_i + Di * E$, soit:

$X_p...X_0 = S_{i,p-1}...S_{i,0} + D_i * E_{p-1}...E_0$, avec $X_j$, $S_{i,j}$ et $E_j$ les mots de Bt bits de X, $S_i$ et B, et $S_i$ étant une valeur actualisée de S telle que $S_0 = 0$ et $S_{p-1} = S$, en décomposant ledit calcul à l'aide des étapes PX1 à PXp:

PX1) $X'_1X_0 = S_{i,1}S_{i,0} + D_i * E_0$ en chargeant $D_i$ dans le registre 110, $S_{i,1}$ dans le registre 112, $S_{i,0}$ dans le registre 111, en initialisant à "0" la bascule 162, et en chargeant successivement les m mots de k bits constituant $E_0$ dans le registre 116; à la fin du calcul on sort le contenu du registre 112 qui correspond à $X_0$;

PX2) $X'_2X_1 = S_{i,2}X'_1 + D_i * E_1$ en chargeant $S_{i,2}$ dans le registre 112, et en chargeant successivement les m mots de k bits constituant $E_1$ dans le registre 116; à la fin du calcul on sort le contenu du registre 112 qui correspond à $X_1$;

... ...

PXp-1) $X'_{p-1}X_{p-2} = S_{i,p-1}X'_{p-2} + D_i * E_{p-2}$ en chargeant $S_{i,p-1}$ dans le registre 112, et en chargeant successivement les m mots de k bits constituant $E_{p-2}$ dans le registre 116; à la fin du calcul on sort le contenu du registre 112 qui correspond à $X_{p-2}$;

PXp) $X_pX_{p-1} = X'_{p-1} + D_i * E_{p-1}$ en chargeant des "0" dans le registre 112, et en chargeant successivement les m mots de k bits constituant $E_{p-1}$ dans le registre 116; à la fin du calcul on sort le contenu du registre 112 qui correspond à $X_{p-1}$ et le contenu du registre 111 qui correspond à $X_p$, la sortie de la retenue n'étant pas nécessaire car elle est forcément nulle;

avec $X'_1$ à $X'_{p-1}$ des mots de Bt bits de calcul intermédiaire qui restent dans le registre 111 du coprocesseur 4 entre deux calculs;

PY) $Y_0 = (X * J_0) \bmod 2^{Bt}$, soit:

$Y_0 = (X_p...X_0 * J_0) \bmod 2^{Bt}$, par le calcul suivant réalisé dans le coprocesseur 4:

$Y'_1Y_0 = X_0 * J_0 + 0$ en chargeant $X_0$ dans le registre 110, des "0" dans les registres 111 et 112, en initialisant à "0" la bascule 162, et en chargeant successivement les m mots de k bits constituant $J_0$ dans le registre 116; à la fin du calcul on sort le contenu du registre 112 qui correspond à $Y_0$ seule donnée intéressante;

PZ) $Z = X + N * Y_0$, soit:

$Z_p...Z_0 = X_p...X_0 + Y_0 * N_{p-1}...N_0$, avec $Z_j$, $X_j$ et $N_j$ les mots de Bt bits de Z, X et N, en décomposant à l'aide des étapes PZ1 à PZp:

PZ1) $Z'_1Z_0 = X_1X_0 + Y_0 * N_0$ en chargeant $Y_0$ dans le registre 110, $X_1$ dans le registre 112, $X_0$ dans le registre 111, en initialisant à "0" la bascule 162, et en chargeant successivement les m mots de k bits constituant $N_0$ dans le registre 116; à la fin du calcul on sort le contenu du registre 112 qui correspond à $Z_0$;

PZ2) $Z'_2Z_1 = X_2Z'_1 + Y_0 * N_1$ en chargeant

$X_2$ dans le registre 112, et en chargeant successivement les m mots de k bits constituant $N_1$ dans le registre 116; à la fin du calcul on sort le contenu du registre 112 qui correspond à $Z_1$;

...                    ...

PZp-1) $Z'_{p-1}Z_{p-2} = X_{p-1}Z'_{p-2} + Y_0 * N_{p-2}$ en chargeant $X_{p-1}$ dans le registre 112, et en chargeant successivement les m mots de k bits constituant $N_{p-2}$ dans le registre 116; à la fin du calcul on sort le contenu du registre 112 qui correspond à $Z_{p-2}$;

PZp) $Z_pZ_{p-1} = X_pZ'_{p-1} + Y_0 * N_{p-1}$ en chargeant $X_p$ dans le registre 112, et en chargeant successivement les m mots de k bits constituant $N_{p-1}$ dans le registre 116; à la fin du calcul on sort le contenu du registre 112 qui correspond à $Z_{p-1}$ et le contenu du registre 111 qui correspond à $Z_p$, on sort également la retenue;

avec $Z'_1$ à $Z'_p$ des mots de Bt bits de calcul intermédiaire qui restent en permanence dans le coprocesseur 4;

PS) si la retenue est égale à « 0 » et que $Z \setminus 2^{Bt}$ est inférieure à N alors $S_{i+1} = Z \setminus 2^{Bt}$, sinon $S_{i+1} = Z \setminus 2^{Bt} - N$, $\setminus$ étant une division entière.

Dans l'exemple décrit ci-dessus, l'invention permet d'économiser p additions de Bt bits, soit environ p * Bt cycles d'un signal d'horloge servant au séquencement du coprocesseur 4 et permet d'éviter des échanges ce données entre la mémoire 3 et le coprocesseur 4.

On remarque que l'opération S = A * B - C est réalisée avec une variable C reconstituée à partir de mots de taille inférieure dont la provenance est différente.

Des variantes de réalisation du processeur 4 de la figure 4 sont possibles. En effet, il n'est pas nécessaire de connecter la sortie de la bascule 162 au multiplexeur 140 et la borne 163. On peut, par exemple, connecter la sortie de la bascule 162 au dispositif de contrôle du processeur 4 (non représenté) et relier la troisième entrée du multiplexeur à un "1" logique, le dispositif de contrôle orientant soit un "0" soit un "1" en fonction du bit contenu dans la bascule, un indicateur de débordement contrôlé par le dispositif de contrôle (par exemple un registre de statut) pouvant toujours être fourni à l'utilisateur, c'est à dire au reste du circuit 1. De même, le multiplexeur 161 n'est pas nécessaire mais permet de simplifier le séquencement du coprocesseur 4. En effet, il est possible de charger le nombre "1" dans le registre 122 afin d'utiliser le circuit de multiplication 120 comme un fil, l'envoie de "0" logique se faisant par l'intermédiaire du multiplexeur 126. Il est également possible de modifier la disposition des différents éléments utilisés pour réaliser le calcul détaillé précédemment par rapport aux différents composants du coprocesseur 4 servant à réaliser d'autres fonctions.

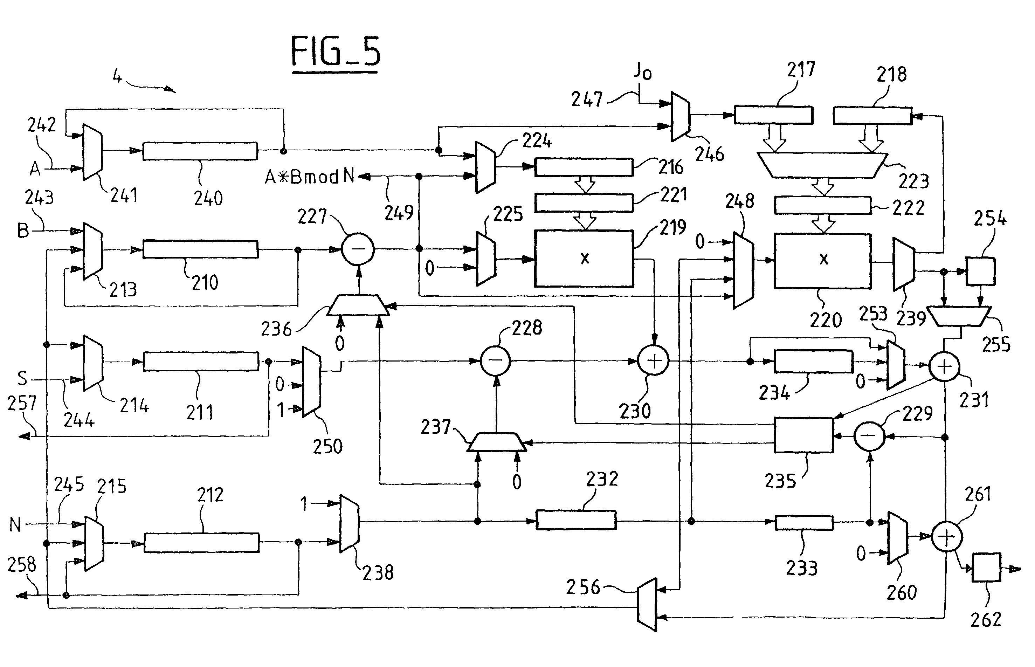

La figure 5 présente une variante de l'invention. Le coprocesseur 4 de la figure 5 comporte

- quatre registres à décalage 210, 211, 212 et 240 à entrée série et sortie série, ces registres comportant un nombre n (n entier) de cellules, avec n = m * k (m et k entiers);
- un multiplexeur 241 comprenant deux entrées série et une sortie série, la sortie série du multiplexeur 241 étant reliée à l'entrée du registre 240, une première entrée du multiplexeur 241 étant reliée à une première borne d'entrée 242 et une deuxième entrée du multiplexeur 241 étant reliée à la sortie du registre 240;
- un multiplexeur 213 comprenant trois entrées série et une sortie série, la sortie série du multiplexeur 213 étant reliée à l'entrée du registre 210, une première entrée du multiplexeur 213 étant reliée à une deuxième borne d'entrée 243 et une deuxième entrée du multiplexeur 213 étant reliée à la sortie du registre 210;
- un multiplexeur 214 comprenant deux entrées série et une sortie série, la sortie série du multiplexeur 214 étant reliée à l'entrée du registre 211 et une première entrée du multiplexeur 214 étant reliée à une troisième borne d'entrée 244;
- un multiplexeur 215 comprenant trois entrées série et une sortie série, la sortie série du multiplexeur 215 étant reliée à l'entrée du registre 212, une première entrée du multiplexeur 215 étant reliée à une quatrième borne d'entrée 245 et une deuxième entrée du multiplexeur 215 étant reliée à la sortie du registre 212;
- trois registres 216, 217 et 218 de k cellules comprenant une entrée série et une sortie parallèle,
- un multiplexeur 246 comprenant deux entrées série et une sortie série, la sortie série du multiplexeur 246 étant reliée à l'entrée du registre 217, une première entrée du multiplexeur 246 étant reliée à une cinquième borne d'entrée 247 et une deuxième entrée du multiplexeur 246 étant reliée à la sortie du registre 240;
- deux circuits 219 et 220 de multiplication comprenant une entrée série, une entrée parallèle pour recevoir k bits et une sortie série,
- deux registres 221 et 222 de mémorisation de k cellules comprenant une entrée et une sortie parallèles, l'entrée du registre 221 étant reliée à la sortie du registre 216, la sortie du registre 221 étant reliée à l'entrée parallèle du circuit de multiplication 219 et la sortie du registre 222 étant reliée à l'entrée parallèle du circuit de multiplication 220;
- un multiplexeur 223 comprenant deux entrées parallèles et une sortie parallèle, une première entrée du multiplexeur 223 étant reliée à la sortie du registre 217 et une deuxième entrée du multiplexeur 223 étant reliée à la sortie du 218, la sortie du multiplexeur 223 étant reliée à l'entrée du registre 222;

- deux multiplexeurs 224 et 225 comprenant chacun deux entrées série et une sortie série, la sortie du multiplexeur 224 étant reliée à l'entrée du registre 216, une première entrée du multiplexeur 224 étant reliée à la sortie du registre 240, la sortie du multiplexeur 225 étant reliée à l'entrée série du circuit de multiplication 219 et une première entrée du multiplexeur 225 reçoit un "0" logique;

- un multiplexeur 248 comprenant quatre entrées série et une sortie série, la sortie du multiplexeur 248 étant reliée à l'entrée série du circuit de multiplication 220 et une première entrée de ce multiplexeur reçoit un "0" logique;

- des circuits de soustraction 227, 228 et 229 comprenant chacun deux entrées série et une sortie série, une première entrée du circuit 227 étant reliée à la sortie du registre 210, la sortie du circuit 227 étant reliée à chacune des deuxièmes entrées des multiplexeurs 224 et 225, à une borne de sortie 249 et à une quatrième entrée du multiplexeur 248;

- un multiplexeur 250 comprenant trois entrées série et une sortie série, la sortie du multiplexeur 250 étant reliée à une première entrée du circuit 228, une première entrée du multiplexeur 250 étant reliée à la sortie du registre 211, une deuxième entrée de ce multiplexeur recevant un "0" logique, et une troisième entrée de ce multiplexeur recevant un "1" logique;

- deux circuits d'addition 230 et 231 comprenant chacun deux entrées série et une sortie série, une première entrée du circuit 230 étant reliée à la sortie du circuit 219 et une deuxième entrée de ce circuit étant reliée à la sortie du circuit de soustraction 228, la sortie du circuit 230 étant reliée à une deuxième entrée du multiplexeur 248, la sortie du circuit 231 étant reliée à une première entrée du circuit 229;

- un multiplexeur 253 comprenant trois encrées série et une sortie série, la sortie série du multiplexeur 253 étant reliée à une première entrée du circuit d'addition 231 et une première entrée de ce multiplexeur étant reliée à la sortie du circuit d'addition 230, la troisième entrée du multiplexeur reçoit un "0" logique;

- des cellules à retard 232, 233 et 234 pour retarder de k temps de cycle la propagation de données binaires (ces cellules étant typiquement des registres à décalage de k bits, c'est-à-dire de la taille des registres 216, 217 et 218), ces cellules comprenant une entrée série et une sortie série, la sortie de la cellule 232 étant reliée d'une part à une troisième entrée du multiplexeur 248 et d'autre part à l'entrée de la cellule 233, la sortie de la cellule 233 étant reliée à une deuxième entrée du circuit 229, l'entrée de la cellule 234 étant reliée à la sortie du circuit d'addition 230 et la sortie de la cellule 234 étant reliée à une deuxième entrée du multiplexeur 253;

- un circuit 235 de comparaison comprenant deux entrées série et deux sorties, une première entrée du circuit 235 étant reliée à la sortie du circuit 231 et une deuxième entrée du circuit 235 étant reliée à la sortie du circuit 229;

- deux multiplexeurs 236 et 237 comprenant chacun deux entrées série, une entrée de sélection, et une sortie série, chacune des premières entrées série des multiplexeurs 236 et 237 recevant un "0" logique, chacune des entrées de sélection étant reliée à l'une des sorties du circuit 235, la sortie du multiplexeur 236 étant reliée à une deuxième entrée du circuit 227 et la sortie du multiplexeur 237 étant reliée à une deuxième entrée du circuit 228;

- un multiplexeur 238 comprenant deux entrées série et une sortie série, une première entrée du multiplexeur 238 recevant un "1" logique, une deuxième entrée du multiplexeur 238 étant reliée à la sortie du registre 212, la sortie du multiplexeur 238 étant reliée d'une part à l'entrée de la cellule 232 et d'autre part à des deuxièmes entrées des multiplexeurs 236 et 237;

- un démultiplexeur 239 comprenant une entrée série et deux sorties série, l'entrée du démultiplexeur 239 étant reliée à la sortie du circuit 220, et une première sortie du démultiplexeur 239 étant reliée à l'entrée du registre 218;

- une cellule à retard 254 pour retarder de k temps de cycle la propagation de données binaires (ces cellules étant typiquement des registres à décalage de k bits), cette cellule comprenant une entrée série et une sortie série, l'entrée de la cellule 254 étant reliée à une deuxième sortie du démultiplexeur 239;

- un multiplexeur 255 comprenant deux entrées série et une sortie série, une première entrée du multiplexeur 255 étant reliée à la deuxième sortie du démultiplexeur 239, une deuxième entrée du multiplexeur 255 étant reliée à la sortie de la cellule 254 et la sortie du multiplexeur 255 étant reliée à une deuxième entrée du circuit d'addition 231;

- un multiplexeur 256 comprenant deux entrées série et une sortie série, une première entrée du multiplexeur 256 étant reliée à la sortie du circuit d'addition 230, la sortie de ce multiplexeur étant reliée à des troisièmes entrées des multiplexeurs 213 et 215 et à une deuxième entrée du multiplexeur 214;

- deux bornes de sortie 257 et 258 reliées respectivement aux sorties des registres 211 et 212;

- un multiplexeur 260 comprenant deux entrées série et une sortie série, une première entrée du multiplexeur 260 étant reliée à la sortie de la cellule à retard 233, et une deuxième entrée recevant un "0" logique;

- un circuit d'addition 261 comprenant deux entrées série, une sortie de calcul, et une sortie de retenue, une première entrée du circuit d'addition 261 étant reliée à la sortie du multiplexeur 260, une deuxième entrée du circuit d'addition 261 étant reliée à la sortie du circuit d'addition 231, la sortie de calcul du circuit d'addition 261 étant reliée à la deuxième entrée du multiplexeur 256;

- une bascule 262 de mémorisation comprenant une entrée et une sortie, l'entrée étant reliée à la sorite de retenue du circuit d'addition 261, et la sortie de la bascule 262 étant reliée à un dispositif de supervision du coprocesseur 4 (non représenté).

La fonction de retard des cellules à retard 232 et 233 est utilisée pour réaliser des calculs modulaires de manière interne, comme expliqué dans D2. Dans l'invention, les cellules à retard 232 et 233 sont utilisées comme des registres à décalage et seront appelées par la suite registres 232 et 233.

Comme on le verra par la suite, cet exemple de coprocesseur réalisé conformément à l'invention peut subir des modifications sans sortir du cadre de l'invention.

En ce qui concerne les bornes de sortie et d'entrée, on pourra choisir d'utiliser des bornes distinctes mais celles-ci pourront être aussi une ou des bornes d'entrée/sortie communes à plusieurs éléments du coprocesseur. En utilisant des bornes distinctes, un avantage est de pouvoir recevoir et/ou fournir des données de et/ou à des éléments extérieurs au coprocesseur (tels que le processeur de traitement 2 par exemple) en parallèle, ce qui diminue la durée des échanges entre le circuit et des éléments extérieurs.

Pour réaliser l'opération faisant l'objet de l'invention, il convient de rendre les circuits de soustraction 227 et 228 transparents aux flux de bits reçus sur leurs premières entrées. On sélectionne en permanence la deuxième entrée du multiplexeur 255 pour que les données produites par le circuit de multiplication 220 soient fournies avec un retard de k cycles d'horloge au circuit d'addition 231.

Pour des raisons de clarté, dans les explications qui vont suivre, on ne tiendra pas compte des retards causés par les circuits 227, 228, 230, 231 et 261 de soustraction et d'addition ni d'éventuels retard causé par l'initialisation des différents éléments au coprocesseur 4. En effet, l'homme du métier sait comment synchroniser des circuits entre eux. Les explications qui vont suivre permettront de réaliser le séquencement nécessaire des différents éléments du coprocesseur 4 pour réaliser l'opération élémentaire de l'invention S = A * B + C, A et B étant codés sur Bt = m * k bits, et C et S étant codés sur 2 * Bt = 2 * m * k bits, m étant un nombre pair:

Initialisation:

IT0) on charge dans le registre 240 les m * k bits de l'opérande A; on charge $A_0$ et $A_1$ respectivement dans les registres 221 et 222 via les registres 216 et 217, $A_0$ et $A_1$ étant les mots de k bits de poids respectifs 0 et 1 de l'opérande A; on charge dans le registre 210 les m * k bits de l'opérande B; on charge dans le registre 211 les m * k bits de poids faible de l'opérande C notée $C_0$; on charge dans le registre 212 les m * k bits de poids fort de l'opérande C notée $C_1$; on initialise à zéro les registres 232 et 233 et la cellule à retard 254, les circuits d'addition 230, 231 et 261, et les circuits de multiplication 219 et 220; et si il s'agit d'une première opération élémentaire, alors on initialise à "0" la bascule 262.

Première itération:

IT1) on effectue un décalage de 2 * k bits sur les registres 210, 211, 212, 232, les données sortant au registre 210 étant multipliées par le contenu du registre 221 dans le circuit 219 et par le contenu du registre 222 dans le circuit 220, le registre 210 ayant son entrée reliée à sa sortie, les données sortant du registre 211 étant additionnées avec le résultat sortant du circuit 219 dans le circuit 230 et avec le résultat sortant du circuit 220 avec un décalage de k bits dans le circuit 231, les données sortant du registre 212 étant chargées dans les registres 232 et 233, les données entrant dans le registre 212 provenant de la sortie du circuit 231, le circuit 261 étant rendu transparent par l'envoi de "0" logiques via le multiplexeur 260;

IT2) on effectue un décalage de (m - 2) * k bits sur les registres 210 et 211, les données sortant du registre 210 étant multipliées par le contenu du registre 221 dans le circuit 219 et par le contenu du registre 222 dans le circuit 220, le registre 210 ayant son entrée reliée à sa sortie, les données sortant du registre 211 étant additionnées avec le résultat sortant du circuit 219 dans le circuit 230 et avec le résultat sortant du circuit 220 avec un décalage de k bits dans le circuit 231, les données entrant dans le registre 211 provenant de la sortie du circuit 231, le circuit 261 étant rendu transparent par l'envoi de "0" logiques via le multiplexeur 260;

IT3) on effectue un décalage de 1 bit sur les registres 211, 232 et 233, un "0" étant envoyé aux circuits 219 et 220 par les multiplexeurs 225 et 248, le bit présent dans la bascule 262 étant additionné avec le résultat sortant du circuit 219 dans le circuit 230 (par l'envoi, soit d'un "0", soit d'un "1", à l'aide du multiplexeur 250, en fonction de l'état du contenu de la bascule 262), le résultat sortant du circuit 230 étant additionné avec le résultat sortant du circuit 220 dans le circuit 231, le bit sortant du registre 233 étant additionné au résultat sortant du circuit 231 dans le circuit 261, les données entrant dans le registre 211 provenant de la sortie du circuit 261;

IT4) on effectue un décalage de 2 * k - 1 bits sur les registres 211, 232 et 233, des "0" étant envoyés aux circuits 219 et 220 par les multiplexeurs 225 et 248, des "0" étant additionnés avec le résultat sortant du circuit 219 dans le circuit 230, le résultat sortant du circuit 230 étant additionné avec le résultat sortant du circuit 220 dans le circuit 231, les bits sortant du registre 233 étant additionnés au résultat sortant du circuit 231 dans le circuit 261, les données entrant dans le registre 211 provenant de la sortie du circuit 261; lors du dernier décalage, on mémorise dans la bascule 262 la retenue présente dans le circuit 261; IT5) pendant que l'on effectue les étapes IT1 à IT4, on charge les mots $A_2$ et $A_3$ respectivement dans les registres 216 et 217.

A l'issue de la première itération, le registre 210 contient l'opérande B; le registre 211 contient un résultat intermédiaire qui correspond aux m * k bits de poids fort de l'opération $A_0 * B + C_{1,1}C_{1,0}C_0$, $A_0$ correspondant aux k bits de poids faible de A, $C_{1,1}C_{1,0}$ correspondant aux deux mots de k bits de poids faible du mot $C_1$ de k * m bits de poids fort de l'opérande C, et $C_0$ correspondant au mot de m * k bits de poids faible de l'opérande C; le registre 212 contient en bits de poids fort les mots $S_{0,1}S_{0,0}$ et en bits de poids faible les mots $C_{1,m-1}$ à $C_{1,2}$, les mots $S_{0,1}$ et $S_{0,0}$ correspondant aux deux mots de k bits de poids faible du mot $S_0$ de m * k bits du résultat S de l'opération élémentaire de l'invention, les mots $C_{1,m-1}$ à $C_{1,2}$ correspondant aux m - 2 mots de k bits de poids fort du mot $C_1$ de m * k bits de poids fort de l'opérande C; les registres 216 et 217 contiennent les mots $A_2$ et $A_3$ correspondant aux mots de k bits de poids respectifs 2 et 3 de l'opérande A; la bascule 262 contient une éventuelle retenue de débordement résultant de l'itération.

Boucle de calcul:

on répète (m / 2) - 1 fois l'initialisation de boucle et l'itération de boucle qui suivent, j étant un indice variant de 1 à (m /2) - 1:

Initialisation de boucle:

IT'0)on charge dans le registre 221 le mot $A_{2*j}$ contenu dans le registre 216; on charge dans le registre 222 le mot $A_{2*j+1}$ contenu dans le registre 217; on initialise à zéro les registres 232 et 233, et les circuit 230, 231 et 261.

Itération de boucle:

on effectue les étapes IT1 à IT4 définies précédemment:
IT'5)pendant que l'on effectue les étapes IT1 à IT4, on charge le mot $A_{2*j+2}$ dans le registre 216, et on charge le mot $A_{2*j+3}$ dans le registre 217.

A l'issue de chaque itération de boucle, le registre 210 contient l'opérande B; le registre 211 contient un résultat intermédiaire qui correspond aux m * k bics de poids fort de l'opération $A_{2*j+1}..A_0 * B + C_{1,2*j+1}..C_{1,0}C_0$, $A_{2*j+1}..A_0$ correspondant aux (2 * j + 2) * k bits de poids faible de A, $C_{1,2*j+1}..C_{1,0}$ correspondant aux (2 * j + + 2) * k bits de poids faible du mot de k * m bits de poids fort de l'opérande C, et $C_0$ correspondant au mot de m * k bits de poids faible de l'opérande C; le registre 212 contient en bics de poids fort les mots $S_{0,2*j+1}$ à $S_{0,0}$ et en bits de poids faible les mots $C_{1,m-1}$ à $C_{1,2*j+2}$, les mots $S_{0,j}$ à $S_{0,0}$ correspondant aux j * k bits de poids faible du mot $S_0$ de m * k bits du résultat S de l'opération élémentaire de l'invention, les mots $C_{1,m-1}$ à $C_{1, 2*j+2}$ correspondant aux m - 2 - 2 * j mots de k bits de poids fort du mot $C_1$ de m * k bits de poids fort de l'opérande C; les registres 216 et 217 contiennent les mots $A_{2*j+2}$ et $A_{2*j+3}$ correspondant aux mots de k bits de poids 2 * j + 2 et 2 * j + 3 de l'opérande A; la bascule 262 contient une éventuelle retenue de débordement résultant de l'itération.

A l'issue de la dernière itération, le résultat S est contenu dans les registres 211 et 212, une éventuelle retenue étant mémorisée dans la bascule 262. Si l'on désire récupérer la totalité du résultat, on sort les données contenu dans les registres 211 et 212 par l'intermédiaire des bornes 257 et 258, et on récupère l'éventuelle retenue indiquant un débordement de calcul.

Si on désire enchaîner un calcul, on sort uniquement le contenu du registre 212. Pour effectuer l'enchaînement de calcul, on charge dans le registre 212 un mot de Bt = m * k bits de poids supérieur de la variable à additionner; et on charge le mot de poids supérieur remplaçant A dans le registre 240; on n'effectue pas la remise à jour de la bascule 262.

Si les opérandes sont codées sur un nombre m de mots de k bits avec m impair, alors on se ramène au cas où m est pair en rajoutant un mot constitué de k "0".

A titre d'exemple, la réalisation d'une opération $P_{field}(D, E)_N = S$ avec le circuit 1 de la figure 2 utilisant le processeur 4 de la figure 5, D, E, S et N étant codés sur p mots de Bt bits, Bt étant égal à m * k bits se déroule ainsi:

on répète p fois la boucle de calcul constituée de la succession d'étapes suivantes, i étant un indice variant de 0 à p-1 et étant incrémenté pour chaque exécution de la boucle par le processeur 2 :

PX) calcul de $X = S_i + D_i * E$, soit:
$X_p...X_0 = S_{i,p-1}...S_{i,0} + D_i * E_{p-1}...E_0$, avec $Xj$, $S_{i,j}$ et $E_j$ les mots de Bt bits de X, $S_i$ et B, et $S_i$ étant une valeur actualisée de S telle que $S_0 = 0$ et $S_{p-1} = S$, en décomposant à l'aide des étapes PX1 à PXp:

PX1) $X'_1X_0 = S_{i,1}S_{i,0} + D_i * E_0$ en chargeant $D_i$ dans le registre 210, $S_{i,1}$ dans le registre 212, $S_{i,0}$ dans le registre 211, en initialisant à "0" la bascule 262, et en chargeant $E_0$ dans le registre 240; à la fin du calcul on sort le contenu du registre 212 qui corres-

pond à $X_0$;

PX2) $X'_2X_1 = S_{i,2}X'_1 + D_i * E_1$ en chargeant $S_{i,2}$ dans le registre 212, et en chargeant $E_1$ dans le registre 240; à la fin du calcul on sort le contenu du registre 212 qui correspond à $X_1$;

...        ...

PXp-1) $X'_{p-1}X_{p-2} = S_{i,p-1}X'_{p-2} + D_i * E_{p-2}$ en chargeant $S_{i,p-1}$ dans le registre 212, et en chargeant $E_{p-2}$ dans le registre 240; à la fin du calcul on sort le contenu du registre 212 qui correspond à $X_{p-2}$;

PXp) $X_pX_{p-1} = X'_{p-1} + D_i * E_{p-1}$ en chargeant des "0" dans le registre 212, et en chargeant $E_{p-1}$ dans le registre 240; à la fin du calcul on sort le contenu du registre 212 qui correspond à $X_{p-1}$ et le contenu du registre 211 qui correspond à $X_p$, la sortie de la retenue n'étant pas nécessaire car elle est forcément nulle;

avec $X'_1$ à $X'_{p-1}$ des mots de Bt bits de calcul intermédiaire qui restent dans le registre 211 du coprocesseur 4 entre deux calculs;

PY) $Y_0 = (X * J_0) \bmod 2^{Bt}$, soit:

$Y_0 = (X_p...X_0 * J_0) \bmod 2^{Bt}$, par le calcul suivant réalisé dans le coprocesseur 4:

$Y'_1Y_0 = X_0 * J_0 + 0$ en chargeant $X_0$ dans le registre 210, des "0" dans les registres 211 et 212, en initialisant à "0" la bascule 262, et en chargeant $J_0$ dans le registre 240; à la fin du calcul on sort le contenu du registre 212 qui correspond à $Y_0$ seule donnée intéressante;

PZ) $Z = X + N * Y_0$, soit:

$Z_p...Z_0 = X_p...X_0 + Y_0 * N_{p-1}...N_0$, avec $Z_j$, $X_j$ et $N_j$ les mots de Bt bits de Z, X et N, en décomposant à l'aide des étapes PZ1 à PZp:

PZ1) $Z'_1Z_0 = X_1X_0 + Y_0 * N_0$ en chargeant $Y_0$ dans le registre 210, $X_1$ dans le registre 212, $X_0$ dans le registre 211, en initialisant à "0" la bascule 262, et en chargeant $N_0$ dans le registre 240; à la fin du calcul on sort le contenu du registre 212 qui correspond à $Z_0$;

PZ2) $Z'_2Z_1 = X_2Z'_1 + Y_0 * N_1$ en chargeant $X_2$ dans le registre 212, et en chargeant $N_1$ dans le registre 240; à la fin du calcul on sort le contenu du registre 212 qui correspond à $Z_1$;

...        ...

PZp-1) $Z'_{p-1}Z_{p-2} = X_{p-1}Z'_{p-2} + Y_0 * N_{p-2}$ en chargeant $X_{p-1}$ dans le registre 212, et en chargeant $N_{p-2}$ dans le registre 240; à la fin du calcul on sort le contenu du registre 212 qui correspond à $Z_{p-2}$;

PZp) $Z_pZ_{p-1} = X_pZ'_{p-1} + Y_0 * N_{p-1}$ en chargeant $X_p$ dans le registre 212, et en chargeant successivement les m mots de k bits constituant $N_{p-1}$ dans le registre 240; à la fin du calcul on sort le contenu du registre 212 qui correspond à $Z_{p-1}$ et le contenu du registre 211 qui correspond à $Z_p$, on sort également la retenue;

avec $Z'_1$ à $Z'_p$ des mots de Bt bits de calcul intermédiaire qui restent en permanence dans le coprocesseur 4;

PS) si la retenue est égale à « 0 » et que $Z \setminus 2^{Bt}$ est inférieur à N alors $S_{i+1} = Z 2^{Bt}$, sinon $S_{i+1} = Z \setminus 2^{Bt} - N$, $\setminus$ étant une division entière.

Le coprocesseur 4 de la figure 5 permet de réaliser les calculs environ deux fois plus vite que le coprocesseur 4 de la figure 4 et réduit le nombre d'interventions du processeur 2 pour gérer des échanges de données entre la mémoire 3 et le coprocesseur 4.

Des combinaisons entre les processeurs des figures 4 et 5 sont possibles. On peut par exemple transposer le registre 240 sur le coprocesseur de la figure 4 pour réduire le nombre d'échanges de données. Inversement, on peut supprimer le registre 240 de la figure 5 mais cela impose de charger pendant les itérations les mots de k bits de l'opérande A. De nombreux déplacements d'éléments peuvent être effectués. La cellule à retard 254 peut être placée en sortie du circuit de multiplication 219 à condition d'inverser les mots des registres 216 et 217. On peut également imaginer déplacer le circuit d'addition 261 à un autre endroit dans le circuit, l'important étant que la bascule 262 puisse récupérer la retenue du dernier des circuits d'additions 230, 231 ou 261. De même, la retenue ne doit pas nécessairement être injectée dans le premier des circuits d'addition mais à la place du mot de m * k bits de poids faible qui est additionné. Il est également possible d'utiliser des circuits d'addition ayant plus de deux entrées, il conviendra alors de mémoriser la retenue du dernier des circuits d'addition utilisés et d'injecter la retenue à la place du mot de poids faible additionné.

Les tailles des opérandes peuvent très bien être différentes les unes des autres, on pourra toujours se ramener à une taille de m * k bits ou effectuer un nombre d'itérations fonction de la taille des opérandes.

## Revendications

1.  Circuit de calcul pour réaliser une opération S = A * B + C, A et B étant des entiers codés sur au plus m mots de k bits, m et k étant des entiers non nuls, le circuit de calcul comportant:

- des premier, deuxième et troisième registres (110, 111, 112, 210, 211, 212) de m * k bits,

le premier registre (110) contenant la donnée B, le deuxième registre contenant soit les m mots de poids faible de C soit un résultat intermédiaire précédemment mémorisé, le troisième registre contenant des mots de poids faibles du résultat S,

- un quatrième registre (121, 221) de k bits mémorisant un mot de A;
- un premier circuit de multiplication (119, 219) pour réaliser des multiplications entre les données des premier et quatrième registres (110, 121, 210, 221);
- des moyens d'addition (130, 230, 231) pour réaliser une addition des m mots de poids faible du résultat sortant du circuit de multiplication (119, 219) et du contenu du deuxième registre (111); et
- des premiers moyens de liaison pour :

  * relier la sortie des moyens d'addition au troisième registre et mémoriser un mot du résultat S,
  * puis relier la sortie des moyens d'addition au deuxième registre et mémoriser un résultat intermédiaire actualisé,

le circuit étant **caractérisé en ce que** la donnée C est codée sur 2*m mots de k bits, en ce que le troisième registre mémorise des mots de poids faibles du résultat S et/ou des mots de poids forts de la donnée C, et en ce que le circuit comporte également :

- des deuxièmes moyens de liaison pour fournir aux moyens d'addition (130, 131, 230, 231, 261), simultanément la retenue mémorisée lors d'une précédente addition et un mot de k bits de C mémorisé dans le troisième registre (112), de manière à additionner au mot de poids fort du résultat de la multiplication, simultanément la retenue et le mot de C à additionner, dès que le contenu du deuxième registre (111) a été additionné, et
- des moyens pour mémoriser (162, 262) une retenue éventuelle résultant d'un débordement de l'addition.

2. Circuit selon la revendication 1, **caractérisé en ce que** le circuit de calcul comporte également un cinquième registre (240) de m * k bits pour fournir de manière successive des mots de k bits au quatrième registre (221).

3. Circuit selon l'une des revendications 1 ou 2, **caractérisé en ce que** le circuit de calcul comporte également un deuxième circuit de multiplication (220) pour effectuer, simultanément avec le premier circuit de multiplication (219), la multiplication de la donnée du premier registre (210) avec une donnée d'un sixième registre (222) de k bits, les moyens d'addition additionnant, avec un décalage de k bits, le résultat sortant du deuxième circuit de multiplication (220).

4. Coprocesseur d'arithmétique modulaire (4) convenant pour la mise en oeuvre d'opérations modulaires de type Pfield, le coprocesseur comportant des moyens pour mettre en oeuvre des opérations modulaires sur des nombres de m * k bits, m et k étant des entiers, **caractérisé en ce qu'**il comporte le circuit de calcul de l'une des revendications 1 à 3.

5. Dispositif de calcul modulaire (1) comportant un processeur (2), une mémoire (3), **caractérisé en ce qu'**il comporte le coprocesseur (4) de la revendication 4.

6. Procédé de calcul de l'opération S = A * B + C, A et B étant des entiers codés sur au plus m mots de k bits, m et k étant des entiers non nuls, procédé au cours duquel :

- on multiplie, dans un circuit de multiplication (119, 219), la donnée B contenue dans un premier registre (110, 210) de m * k bits par un mot de A mémorisé dans un quatrième registre (121, 221) de k bits ;
- on additionne un résultat intermédiaire précédemment mémorisé dans un deuxième registre (111, 211) de m * k bits et les m mots de poids faible du résultat sortant du circuit de multiplication (119, 219);
- on mémorise un mot du résultat S dans un troisième registre (112, 212) puis un résultat intermédiaire actualisé de m mots de k bits dans le deuxième registre (111, 211);

le procédé étant **caractérisé en ce que** la donnée C est codée sur 2*m mots de k bits, des mots de poids forts de C étant mémorisés dans le troisième registre (112), et en ce que :

- on additionne au mot de poids le plus fort du résultat de la multiplication, simultanément une retenue éventuelle précédemment mémorisée et un mot de C de poids le plus faible contenu dans le troisième registre (112), dès que la donnée du troisième registre (111) a été additionnée aux m mots de poids faibles du résultat de la multiplication,
- on mémorise une retenue éventuelle actualisée résultant d'un débordement de l'addition, et
- on répète toutes les opérations précédentes en changeant la donnée du quatrième registre (121, 221)

7. Procédé selon la revendication 6, **caractérisé en ce que** l'on mémorise entièrement une opérande dans un cinquième registre (240) de m * k bits pour fournir l'opérande de manière successive au quatrième registre (121).

8. Procédé selon l'une des revendications 6 ou 7, **caractérisé en ce que** l'on effectue en parallèle une deuxième multiplication dont le résultat est additionné avec un décalage de k bits au résultat de la première multiplication.

9. Procédé de calcul convenant pour la mise en oeuvre d'opérations modulaires de type Pfield sur des opérandes de taille supérieure à m * k bits, procédé au cours duquel les opérandes sont traitées par sous-opérandes de m * k bits, **caractérisé en ce que** l'on utilise le procédé de l'une des revendications 6 à 8.

**Claims**

1. A calculating circuit for performing an operation S = A * B + C, where A and B are whole number's coded on at most m words of k bits, m and k being non-zero whole numbers, the calculating circuit comprising:

   - first, second and third registers (110, 111, 112, 210, 211, 212) of m * k bits,

   the first register containing the data item B, the second register containing either the m lightweight words of C or an intermediate result memorised beforehand, the third register containing lightweight words of the result S,

   - a fourth register (121, 221) of k bits memorising a word of A;

   - a first multiplication circuit (119, 219) for performing multiplications between the data from the first and fourth registers (110, 121, 210, 221);

   - adding means (131, 230, 231) for performing an addition of the m lightweight words of the result which is output from the multiplication circuit (119, 219) and the contents of the second register (111); and

   - first connecting means for:

     * connecting the output of the adding means to the third register and memorising a word of the result S,

     * then, connecting the output of the adding means to the second register and memorising an intermediate result thereby produced,

   the circuit being **characterised in that** the data item C is coded on 2 * m words of k bits, in that the third register memorises lightweight words of the result S and/or heavyweight words of the data item C, and in that the circuit further comprises:

   - second connecting means for supplying to the adding means (130, 131, 230, 231, 261) simultaneously.the retained data memorised in a previous addition and a word of k bits of C memorised in the third register (112), whereby to add, to the heavyweight word in the result of the multiplication, simultaneously, the retained data and the word of C that are to be added together, once the content of the second register (111) has been added, and

   - means (162, 262) for memorising any retained data that may result from overrun of the addition.

2. A circuit according to Claim 1, **characterised in that** the calculating circuit further includes a fifth register (240) of m * k bits for supplying words of k bits successively to the fourth register (221).

3. A circuit according to Claim 1 or Claim 2, **characterised in that** the calculating circuit further includes a second multiplication circuit (220) for performing, simultaneously with the first multiplication circuit (219), multiplication of the data item from the first register (210) with a data item from a sixth register (222) of k bits, the adding means adding, with a shift of k bits, the result which is output from the second multiplication circui (220).

4. A modular arithmetical coprocessor (4) for performing modular operations of the Pfield type, the coprocessor including means for performing modular operations on numbers of m * k bits, where m and k are whole numbers, **characterised in that** it comprises the calculating circuit of one of Claims 1 to 3.

5. Modular computing apparatus (1) having a processor (2) and a memory (3), **characterised in that** it includes the coprocessor (4) of Claim 4.

6. A method of calculating the operation S = A * B + C, where A and B are whole numbers coded on at most m words of k bits, m and k being non-zero whole numbers, including the steps of:

- multiplying, in a multiplication circuit (219), the data item B contained in a first register (110, 210) of m

  * k bits by a word of A memorised in a fourth register (121, 221) of k bits;

- adding together an intermediate result memorised beforehand in a second register (111, 211) of m * k bits and the m lightweight words of the result which is output from the multiplication circuit (119, 219);

- memorising a word of the result S in a third register (112, 212) and then an intermediate result, consisting of m words of k bits, which is thereby obtained in the second register (111, 211);

the method being **characterised in that** the data item C is coded on 2 * m words of k bits, heavyweight words of C being memorised in the third register (112), and in that:

- any retained data that may have been memorised beforehand, and a word of the lightest weight of C contained in the third register (112), are added simultaneously to the word of heaviest weight,in the result of the multiplication, once the data item from the third register (111) has been added to the m lightweight words in the result of the multiplication,

- memorising any retained data produced as a result of overrun of the addition step, and

- repeating all of the foregoing operations, changing the data item of the fourth register (121, 221).

7. A method according to Claim 6, **characterised in that** an operand is entirely memorised in a fifth regulator (240) of m * k bits whereby to supply the operand successively to the fourth regulator (121).

8. A method according to Claim 6 or Claim 7, **characterised in that** a second multiplication step is performed in parallel, and its result is added, with a shift of k bits, to the result of the first multiplication.

9. A method of calculation, for performing modular operations of the Pfield type on operands the size of which exceeds m * k bits, the method including the step of treating the operands with sub-operands of m * k bits, **characterised in that** the method of one of Claims 6 to 8 is used.

**Patentansprüche**

1. Rechenschaltkreis für eine Operation S = A B + C, wobei A und B ganze Zahlen sind, die mit höchstens m Worten à k Bits codiert sind, wobei m und k ganze Zahlen ungleich Null sind, wobei der Rechenschaltkreis umfaßt:

- ein erstes, zweites und drittes Register (110, 111, 112, 210, 211, 212) mit m k Bits,

wobei das erste Register (110) den Datenwert B enthält, das zweite Register entweder die m Worte niedrigen Gewichts von C oder ein vorher abgespeichertes Zwischenergebnis enthält, das dritte Register die Worte niedrigen Gewichts des Ergebnisses S enthält,

- ein viertes Register (121, 221) mit k Bits zur Abspeicherung eines Wortes von A;
- einen ersten Multiplikatorschaltkreis (119, 219) zum Durchführen von Multiplikationen von Daten aus dem ersten und vierten Register (110, 121, 210, 221);
- Additionsvorrichtungen (130, 230, 231) für das Durchführen einer Addition von m Worten niedrigen Gewichts des Ergebnisses am Ausgang des Multiplikatorschaltkreises (119, 219) und des Inhalts des zweiten Registers (111) und
- erste Verbindungsvorrichtungen für:

  * Verbinden des Ausgangs von Additionsvorrichtungen mit dem dritten Register und Abspeichern eines Wortes des Ergebnisses S,
  * anschließendes Verbinden des Ausgangs der Additionsvorrichtungen mit dem zweiten Register und Abspeichern eines aktualisierten Zwischenergebnisses,

wobei der Schaltkreis **dadurch gekennzeichnet** ist, daß der Datenwert C codiert ist mit 2 · m Worten à k Bits, daß das dritte Register Worte niedrigen Gewichts des Ergebnisses S und/oder Worte hohen Gewichts des Datenwertes C abspeichert und daß der Schaltkreis außerdem umfaßt:

- zweite Verbindungsvorrichtungen für das gleichzeitige Ausgeben an die Additionsvorrichtungen (130, 131, 230, 231, 261) des Überlaufs, der bei der vorangehenden Addition abgespeichert wurde, und eines Wortes mit k Bits von C, das in dem dritten Register (112) abgespeichert wurde, um dem Wort hohen Gewichts des Ergebnisses der Multiplikation gleichzeitig den Überlauf und das zu addierende Wort von C hinzuzufügen, wenn der Inhalt des zweiten Register (111) hinzugefügt wurde, und

-       Vorrichtungen für das Abspeichern (162, 262) eines eventuellen Überlaufs, der sich beim Überlauf bei der Addition ergibt.

2.   Schaltkreis nach Anspruch 1, **dadurch gekennzeichnet, daß** der Rechenschaltkreis außerdem ein fünftes Register (240) mit m k Bits für das sukzessive Ausgeben von Worten mit k Bits an das vierte Register (221) umfaßt.

3.   Schaltkreis nach einem der Ansprüche 1 oder 2, **dadurch gekennzeichnet, daß** der Rechenschaltkreis außerdem einen zweiten Multiplikatorschaltkreis (220) umfaßt für das simultane Ausrühren der Multiplikation des Datenwertes des ersten Registers (210) mit Daten eines sechsten Registers (222) mit k Bits mit dem ersten Multiplikatorschaltkreis (219), wobei die Additionsvorrichtungen mit einer Verschiebung um k Bits das Ergebnis am Ausgang des zweiten Multiplikatorschaltkreises (220) hinzufügen.

4.   Modulo-arithmetischer Koprozessor (4) für das Umsetzen von Modulo-Operationen vom Typ Pfield, wobei der Koprozessor Vorrichtungen für das Umsetzen von Modulo-Operationen auf Zahlen mit m · k Bits umfaßt, wobei m und k ganze Zahlen sind, **dadurch gekennzeichnet, daß** er den Rechenschaltkreis nach einem der Ansprüche 1 bis 3 umfaßt.

5.   Vorrichtung für die Modulo-Berechnung (1) mit einem Prozessor (2), einem Speicher (3), **dadurch gekennzeichnet, daß** sie den Koprozessor (4) nach Anspruch 4 umfaßt.

6.   Verfahren zum Berechnen der Operation S = A B + C, wobei A und B ganze Zahlen sind, die mit höchstens m Worten à k Bits codiert sind, wobei m und k ganze Zahlen ungleich Null sind, wobei das Verfahren abläuft, indem:

-       man in einem Multiplikatorschaltkreis (119, 219) den Datenwert B in einem ersten Register (110, 210) mit m k Bits mit einem Wort von A in einem vierten Register (121, 221) mit k Bits multipliziert;
-       man ein vorher abgespeichertes Zwischenergebnis in einem zweiten Register (111, 211) mit m · k Bits und die m Worte niedrigen Gewichts des Ergebnisses am Ausgang des Multiplikatorschaltkreises (119, 219) addiert;
-       ein Wort des Ergebnisses S in einem dritten Register (112, 212) abspeichert und dann ein aktualisiertes Zwischenergebnis mit m Worten à k Bits in dem zweiten Register (111, 211) abspeichert;

wobei das Verfahren **dadurch gekennzeichnet** ist, daß der Datenwert C codiert ist mit 2 · m Worten à k Bits, die Worte hohen Gewichts von C in dem dritten Registers (112) abgespeichert werden und daß:

-       man zu dem Wort hohen Gewichts des Ergebnisses der Multiplikation gleichzeitig einen eventuellen vorher abgespeicherten Überlauf und ein Wort von C mit dem niedrigsten Gewicht in dem dritten Register (112) addiert, sobald der Datenwert des dritten Registers (111) zu den m Worten niedrigen Gewichts des Ergebnisses der Multiplikation hinzugefügt worden ist,
-       man einen eventuellen aktualisierten Überlauf von einem Überlaufen der Addition abspeichert und
-       man diese vorangehenden Operationen wiederholt, indem die Daten des vierten Registers (121, 221) verändert werden.

7.   Verfahren nach Anspruch 6, **dadurch gekennzeichnet, daß** man einen Operanden vollständig in einem fünften Register (240) mit m k Bits abspeichert, um den Operanden sukzessive an das vierte Register (121) auszugeben.

8.   Verfahren nach einem der Ansprüche 6 oder 7, **dadurch gekennzeichnet, daß** man parallel eine zweite Multiplikation durchführt, deren Ergebnis mit einer Verschiebung um k Bits zu dem Ergebnis der ersten Multiplikation hinzugefügt wird.

9.   Rechenverfahren für das Umsetzen von Modulo-Operationen vom Typ Pfield mit Operanden, die größer als m k Bits sind, in dessen Verlauf die Operanden verarbeitet werden mittels Teiloperanden mit m k Bits, **dadurch gekennzeichnet, daß** man das Verfahren nach einem der Ansprüche 6 bis 8 verwendet.

# FIG_1

EP 0 939 362 B1

# FIG_2

Message clair

PROCESSEUR DE TRAITEMENT

MEMOIRE

COPROCESSEUR ARITHMETIQUE

Message crypté

## FIG_3

FIG_4

EP 0 939 362 B1

FIG_5